# EUROPEAN PATENT APPLICATION

(11) **EP 4 810 660 A1**
(43) Date of publication of application: **23.09.2026**
(21) Application number: 26159720.7
(22) Date of filing: 20.02.2026
(51) Int. Cl.: C25B 1/04, C25B 1/23, C25B 3/26, C25B 9/75, H01M 8/026, H01M 8/0263, H01M 8/0265

(54) **SEPARATOR AND APPARATUS**

(30) Priority: 19.03.2025 JP 2025046100
(71) Applicant: KABUSHIKI KAISHA TOSHIBA, Kawasaki-shi, Kanagawa 212-0013 (JP)
(72) Inventor: HONGO, Takuya, Kawasaki-shi, Kanagawa (JP); KOFUJI, Yusuke, Kawasaki-shi, Kanagawa (JP); KITAGAWA, Ryota, Kawasaki-shi, Kanagawa (JP)
(74) Representative: Hoffmann Eitle

(57) **Abstract**

A separator according to an embodiment includes a flow channel comprising a first flow-channel wall, a second flow-channel wall, and a first flow-channel groove provided between the first flow-channel wall and the second flow-channel wall. A first narrowing part and/or a first expansion part are provided in the first flow-channel groove. The first narrowing part narrows a part of the latter half of the first flow-channel groove. The first expansion part expands a part of the latter half of the first flow-channel groove.

## Description

### FIELD

Embodiments described herein relate generally to a separator, an electrochemical cell, a stack and an apparatus.

### BACKGROUND

In recent years, expectations for renewable energy have been increasing. Examples of renewable energy include solar power generation, hydroelectric power generation, wind power generation, and geothermal power generation.

Furthermore, as efforts to decarbonize, power generation using fuel cells and energy conversion by electrolysis are attracting attention.

### BRIEF DESCRIPTION OF THE DRAWINGS

FIG. 1 is a schematic diagram of a separator according to an embodiment;
FIG. 2 is a schematic cross-sectional diagram of a separator according to an embodiment;
FIG. 3 is a schematic cross-sectional diagram of a separator according to an embodiment;
FIG. 4 is a schematic perspective diagram of a separator according to an embodiment;
FIG. 5 is a schematic diagram of a separator according to an embodiment;
FIG. 6 is a schematic perspective diagram of a separator according to an embodiment;
FIG. 7 is a schematic perspective diagram of a separator according to an embodiment;
FIG. 8 is a schematic perspective diagram of a separator according to an embodiment;
FIG. 9 is a schematic diagram of a separator according to an embodiment;
FIG. 10 is a schematic perspective diagram of a separator according to an embodiment;
FIG. 11 is a schematic perspective diagram of a separator according to an embodiment;
FIG. 12 is a schematic perspective diagram of a separator according to an embodiment;
FIG. 13 is a schematic perspective diagram of a separator according to an embodiment;
FIG. 14 is a schematic diagram of a separator according to an embodiment;
FIG. 15 is a schematic perspective diagram of a separator according to an embodiment;
FIG. 16 is a schematic diagram of a separator according to an embodiment;
FIG. 17 is a schematic perspective diagram of a separator according to an embodiment;
FIG. 18 is a schematic diagram of a separator according to an embodiment;
FIG. 19 is a schematic perspective diagram of a separator according to an embodiment;
FIG. 20 is a schematic diagram of a separator according to an embodiment;
FIG. 21 is a schematic diagram of a separator according to an embodiment;
FIG. 22 is a schematic diagram of a separator according to an embodiment;
FIG. 23 is a schematic diagram of a separator according to an embodiment;
FIG. 24 is a schematic diagram of a separator according to an embodiment;
FIG. 25 is a schematic diagram of an electrochemical cell according to an embodiment;
FIG. 26 is a schematic diagram of a stack according to an embodiment; and
FIG. 27 is a schematic diagram of an apparatus according to an embodiment;

### DETAILED DESCRIPTION

A separator according to an embodiment includes a flow channel comprising a first flow-channel wall, a second flow-channel wall, and a first flow-channel groove provided between the first flow-channel wall and the second flow-channel wall. A first narrowing part and/or a first expansion part are provided in the first flow-channel groove. The first narrowing part narrows a part of the latter half of the first flow-channel groove. The first expansion part expands a part of the latter half of the first flow-channel groove.

An electrochemical cell according to an embodiment comprises a first electrode which comprises a support; a second electrode including a support; a diaphragm between the first electrode and the second electrode; a first separator connected to the first electrode; and a second separator connected to the second electrode. The first separator or/and the second separator is the separator according to an embodiment. An apparatus according to an embodiment that is an electrolyzing apparatus or a fuel cell comprises the electrochemical cell according to an embodiment.

The following will describe in detail embodiments of the present invention with reference to the drawings. Note that in the following description, the same symbols are assigned to the same members, etc., and the explanation of the members, etc., that have already been explained may be omitted as appropriate.

The physical property values in the specification are values at a temperature of 25 [°C] and a pressure of 1 [atm]. The thickness of each member is the average value of the distance in the stacking direction.

### (FIRST EMBODIMENT)

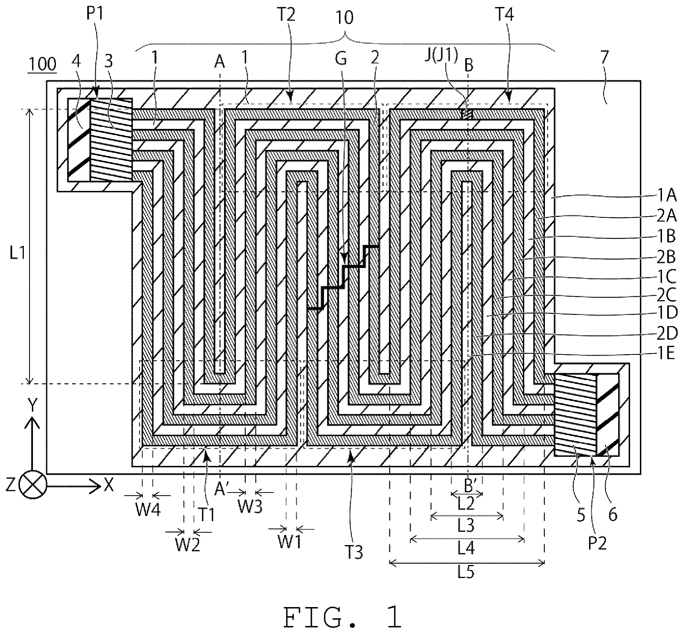

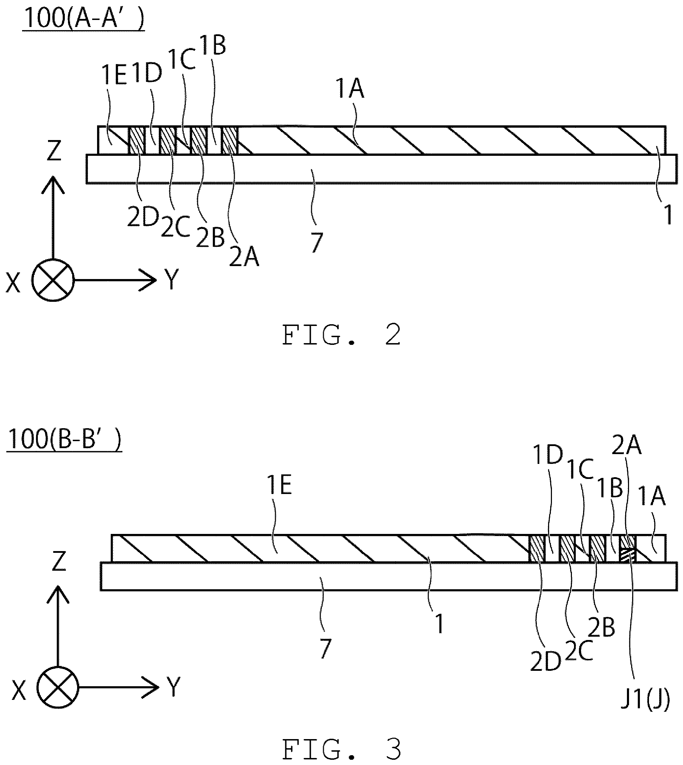

A first embodiment relates to a separator 100. The separator 100 is a flow rectifier (separator with flow channel) used to supply gas to a gas diffusion layer, etc. FIG. 1 illustrates a schematic diagram of the separator 100 according to this embodiment. FIG. 2 illustrates a schematic cross-sectional diagram of FIG. 1 along the line A-A'. FIG. 3 illustrates a schematic cross-sectional diagram of FIG. 1 along the line B-B'. The separator 100 includes a flow channel 10, a supply manifold 4, an exhaust manifold 6, a supply-connection channel 3, and an exhaust-connection channel 5. The flow channel 10, the supply manifold 4, the exhaust manifold 6, the supply-connection channel 3, and the exhaust-connection channel 5 are provided on the frame 7 of the separator 100. In the figures, the directions are represented by X, Y, and Z.

The separator 100 according to the first embodiment is used for electrochemical cells for fuel cells or electrolysis, for example. The separator 100 supplies a fluid used in electrode reactions and discharges a fluid containing products of the electrode reaction. The fluid is a gas and/or a liquid. When the fluid discharged from the exhaust manifold 6 contains both gas and liquid, the pressure loss of the separator 100 can be effectively reduced.

The separator 100 includes a flow channel 10 including flow-channel walls 1 and flow-channel groove(s) 2 provided between the flow-channel walls 1. The flow-channel walls 1 may surround a supply manifold 4, an exhaust manifold 6, a supply-connection channel 3, and an exhaust-connection channel 5.

The area sandwiched by the flow-channel walls 1 is a flow-channel groove 2. The flow-channel walls 1 may be convex parts of metal members provided in the frame 7, or the flow-channel grooves 2 may be concave parts of the metal members provided in the frame 7. Fluid flows through the flow channel 10. The flow channel 10 preferably includes a plurality of flow-channel grooves 2 so that the fluid flows through a plurality of flow-channel grooves 2. In order for the fluid to flow through the porous layer of the electrode in contact with the separator 100 with minimal unevenness, it is preferable that the flow channel 10 has, for example, a serpentine flow channel shape where straight areas and turn-around areas alternately repeat as shown in the schematic diagram of FIG. 1.

The flow-channel walls 1 are composed of metal, for example.

The flow channel 10 includes a plurality of flow-channel grooves 2. The flow channel 10 includes a first flow-channel wall 1A, a first flow-channel groove 2A, a second flow-channel wall 1B, a second flow-channel groove 2B, a third flow-channel wall 1C, a third flow-channel groove 2C, a fourth flow-channel wall 1D, a fourth flow-channel groove 2D, and a fifth flow-channel wall 1E. The ordinal numbers (first, second, third, fourth, fifth, etc.) of the flow-channel walls 1 and flow-channel grooves 2 are for convenience and may not be in order in some cases. When the flow-channel grooves 2 are arranged in a different order (for example, in the order of the first flow-channel groove 2A, the fourth flow-channel groove 2D, the third flow-channel groove 2C, and the second flow-channel groove 2B), the ordinal numbers of the flow-channel walls 1 sandwiching each flow-channel groove 2 will change. In the separator 100, although the first flow-channel groove 2A is adjacent to the second flow-channel groove 2B, for example, when a narrowing part J exists in the first flow-channel groove 2A and the other flow-channel grooves 2 may or may not have the narrowing part J, a flow-channel groove 2 different from the flow-channel groove 2 designated as the first flow-channel groove 2A in FIG. 1 of the separator 100 can be designated as the first flow-channel groove 2A having a first narrowing part J1. In this case, different ordinal numbers can be assigned to the flow-channel walls 1, flow-channel grooves 2, and narrowing part J that are located in the same position, compared to the explanation below. The following descriptions regarding flow-channel grooves 2 do not specifically limit any particular flow-channel groove 2.

The narrowing part J narrows a part of the latter half of the flow-channel groove 2. Since the narrowing part J does not completely block the flow-channel groove 2, the flow-channel groove 2 where the narrowing part J is provided remains open. The flow-channel groove 2 where the narrowing part J is provided has a narrower flow channel than the area where the narrowing part J is not provided. The area at the corner of the folded part or the rounded corner of the flow channel 10 where the flow-channel groove 2 is narrowed, is not the narrowing part J.

In this embodiment, four flow-channel grooves 2 are shown, but the number of flow-channel grooves 2 is not limited to four and can be one or more. For example, a separator with three flow-channel grooves 2, a separator with five flow-channel grooves 2, and a separator with eight flow-channel grooves 2 are also included in the separators of this embodiment.

The first flow-channel groove 2A is provided between the flow-channel walls. In the schematic diagram of FIG. 1, the first flow-channel groove 2A is provided between the first flow-channel wall 1A and the second flow-channel wall 1B.

The second flow-channel groove 2B is provided between the flow-channel walls. In the schematic diagram of FIG. 1, the second flow-channel groove 2B is provided between the second flow-channel wall 1B and the third flow-channel wall 1C.

The third flow-channel groove 2C is provided between the flow-channel walls. In the schematic diagram of FIG. 1, the third flow-channel groove 2C is provided between the third flow-channel wall 1C and the fourth flow-channel wall 1D.

The fourth flow-channel groove 2D is provided between the flow-channel walls. In the schematic diagram of FIG. 1, the fourth flow-channel groove 2D is provided between the fourth flow-channel wall 1D and the fifth flow-channel wall 1E.

The pitch of the flow-channel groove 2 is preferably 0.1 mm or more and 5 mm or less; more preferably 0.3 mm or more and 3 mm or less; and even more preferably 0.5 mm or more and 2.5 mm or less.

The supply-connection channel 3 is provided between the supply manifold 4 and the flow channel 10. The supply-connection channel 3 is a flow path connecting the supply manifold 4 and the flow channel 10. Fluid that has passed through the supply-connection channel 3 flows through the flow channel 10. The supply-connection channel 3 may be protrusions and recesses of the frame 7, or it may be composed of a member which is distinct from the frame 7. The direction in which fluid flows in the supply-connection channel 3 is the same as the direction in which the supply-connection channel 3 and the supply manifold 4 connects to the supply manifold 4.

The supply manifold 4 is an opening of the separator 100. Fluid is supplied from the supply manifold 4. Other manifolds not shown in the figures may be provided in the separator 100.

In the first embodiment, the supply-connection channel 3 and the supply manifold 4 of the separator 100 are provided on the first location P1 side.

The exhaust-connection channel 5 is provided between the exhaust manifold 6 and the flow channel 10. The exhaust-connection channel 5 is a flow path connecting the exhaust manifold 6 and the flow channel 10. Fluid that has passed through the flow channel 10 flows through the exhaust-connection channel 5 and is discharged from the exhaust manifold 6. The exhaust-connection channel 5 may be protrusions and recesses of the frame 7, or it may be composed of a member which is distinct from the frame 7.

The exhaust manifold 6 is an opening of the separator 100. Fluid is discharged from the exhaust manifold 6.

In the first embodiment, the fluid flowing through the flow channel 10 flows from the first location P1 to the second location P2.

In the first embodiment, the exhaust-connection channel 5 and the exhaust manifold 6 of the separator 100 are provided on the second location P2 side.

The frame 7 is preferably insulated and, for example, composed of a resin material.

A narrowing part J is provided in a part of the flow-channel groove 2. For example, as shown in the schematic diagram of FIG. 2, the narrowing part J is not provided at the location of the A-A' cross-section in FIG. 1, but as shown in the schematic diagram of FIG. 3, the narrowing part J is provided at the location of the B-B' cross-section in FIG. 1. The first flow-channel groove 2A is a flow-channel groove 2 having the first narrowing part J1. Flow-channel grooves 2 other than the first flow-channel groove 2A are flow-channel grooves 2 having the narrowing part J or flow-channel grooves 2 not having the narrowing part J.

The narrowing part J of the flow-channel groove 2 is preferably provided in the latter half of the flow-channel groove 2 and not in the former half. When the fluid flows from the first location P1 side to the second location P2 side, assuming the distance of the flow-channel groove 2 is L, the part with a distance up to L/2 from the end on the first location P1 side is considered as the former half of the flow-channel groove 2, and the part with a distance up to L/2 from the end on the second location P2 side is considered as the latter half. By providing the narrowing part J in a part of the flow-channel groove 2, accumulation of gas contained in the fluid, including liquid and gas, flowing through the separator 100 can be suppressed.

The former halves of the first flow-channel groove 2A, the second flow-channel groove 2B, the third flow-channel groove 2C, and the fourth flow-channel groove 2D are located on the first location P1 side. The latter halves of the first flow-channel groove 2A, the second flow-channel groove 2B, the third flow-channel groove 2C, and the fourth flow-channel groove 2D are located on the second location P2 side.

When gas accumulates in the flow-channel groove 2, it is easy for a gas generated at the electrode in contact with the separator 100 to cause a side reaction. In the case of CO₂ electrolysis, the oxygen gas generated at the cathode and having a high concentration on the anode discharge side, and the hydrogen gas generated by the reduction of water due to a side reaction when the concentration of CO₂ is lowered on the cathode discharge side react to form hydrogen peroxide. Since hydrogen peroxide deteriorates the diaphragm, it is preferable to partially narrow some flow-channel grooves 2 to reduce gas accumulation. Narrowing a part of all the flow-channel grooves 2 at each turn-around area in the serpentine flow channel shape or narrowing a part of the flow-channel grooves 2 in the former half of the serpentine flow path shape flow channel 10 is not effective. By narrowing a part of the flow-channel grooves 2 in the latter half, not the former half, of the serpentine flow channel shape flow channel 10, gas accumulation can be reduced.

By providing the narrowing part J, the fluid becomes harder to flow through the flow-channel groove 2. The fluid tends to flow toward the porous layer side of the electrode in an area where the narrowing part J is provided. Since fewer gases are generated by electrode reactions in the former half of the flow channel 10, providing the narrowing part J to change the fluidity of the fluid in the former half of the flow channel 10 is not effective. By not providing the narrowing part J in the former half of the flow channel 10 and providing an area that changes fluidity of the fluid in a part of the latter half of the flow channel 10 where gas tends to accumulate, gas accumulation can be reduced.

It is considered that by providing the narrowing part J, the cross-sectional area of the flow channel decreases locally and the flow rate of the fluid flowing through the flow-channel groove 2 with the narrowing part J increases. As a result, gases contained in the fluid become easier to flow.

When the separator 100 alone has an unclear supply side and discharge side, it is preferable to designate one end of the flow channel 10 as the first location P1 and the other end as the second location P2, and then determine the former half and latter half of the flow channel 10 and each flow-channel groove 2 based on the arrangement of the connecting passages and manifolds. Subsequently, provide the narrowing part J in the flow-channel groove 2 as described below. In other words, it is preferable that the narrowing part J is provided only on either the former half or latter half of the flow-channel grooves 2 where the fluid flows in the same direction. The supply side and discharge side can be determined according to the position of the narrowing part J. When the flow channel 10 includes a flow channel through which the fluid flows from the first location P1 to the second location P2 and another flow path through which the fluid flows from the second location P2 to the first location P1, it is preferable that the narrowing part J is provided on the former half side of the flow-channel groove 2 where the fluid flows from the first location P1 to the second location P2.

The narrowing part J may be composed of the same material as the flow-channel walls 1 or a distinct material from the flow-channel wall 1. Preferably, the narrowing part J includes metal or resin.

The narrowing part J is not a fine unevenness existing throughout the flow-channel walls 1 and the frame 7 but is a shape or member locally provided.

It is preferable that the narrowing part J of the flow-channel groove 2 is provided at the turn-around area of the flow channel 10 having a serpentine flow channel shape. The flow channel 10 includes straight parts and turn-around areas. Straight parts connect the turn-around areas and are mainly linear flow channels. Turn-around areas change the direction of fluid flow by 180 degrees (or substantially 180 degrees). As shown in FIG. 1, the flow channel 10 includes four turn-around areas. The flow channel 10 shown in FIG. 1 includes a first turn-around area T1, a second turn-around area T2, a third turn-around area T3, and a fourth turn-around area T4.

The connection part of the flow channel 10 and the supply-connection channel 3 where the flow-channel groove 2 bends at 90 degrees, is not designated as the turn-around area since the flow channel 10 and the supply-connection channel 3 can be connected so that the flow-channel groove 2 is not bent.

Similarly, the connection part of the flow channel 10 and the exhaust-connection channel 5 where the flow-channel groove 2 bends at 90 degrees, is not designated as the turn-around area since the flow channel 10 and the exhaust-connection channel 5 can be connected so that the flow-channel groove 2 is not bent.

The first turn-around area T1 and the second turn-around area T2 are included in the former half of the flow-channel groove 2. The third turn-around area T3 and the fourth turn-around area T4 are included in the latter half of the flow-channel groove 2.

The boundary between the former half and the latter half of the flow-channel groove 2 is shown by a virtual line G (thick line) in FIG. 1. Since the flow channel 10 has a serpentine flow path shape, the boundary between the former half and the latter half of the flow-channel groove 2 is stepped. The boundary between the former half and the latter half of the flow channel 10 is virtual line G.

The boundary between the former half and the latter half of the flow-channel groove 2 may exist within a turn-around area. In this case, both the former half and the latter half of the flow-channel groove 2 are included in one turn-around area.

Next, taking the first narrowing part J1 as an example, an embodiment of the narrowing part J will be described. The narrowing part J is preferably provided in one or more of the flow-channel grooves 2. For example, when the flow channel 10 has a first flow-channel groove 2A, a second flow-channel groove 2B, a third flow-channel groove 2C, and a fourth flow-channel groove 2D, the narrowing part J is provided in one or more of these flow-channel grooves 2. Hereinafter, an example will be explained where the first narrowing part J1 is provided in the first flow-channel groove 2A. However, the same explanation applies even when the narrowing part J is provided in other flow-channel grooves 2.

One or more first narrowing parts J1 are provided in the first flow-channel groove 2A. Two or more first narrowing parts J1 may be provided in the first flow-channel groove 2A. The first narrowing part J1 is provided in the latter half of the first flow-channel groove 2A, narrowing a part of the first flow-channel groove 2A. The first narrowing part J1 is provided in the fourth turn-around area T4 of the first flow-channel groove 2A.

The schematic diagram of FIG. 1 shows the lengths L1, L2, L3 and L4 of the first flow-channel groove 2A, second flow-channel groove 2B, third flow-channel groove 2C and fourth flow-channel groove 2D in the fourth turn-around area T4, respectively.

The schematic diagram of FIG. 1 also shows the widths W1, W2, W3 and W4 of the first flow-channel groove 2A, second flow-channel groove 2B, third flow-channel groove 2C and fourth flow-channel groove 2D respectively.

The boundary between the former half and the latter half of the first flow-channel groove 2A is located in the middle between the second turn-around area T2 and the third turn-around area T3. The latter half of the first flow-channel groove 2A includes the third turn-around area T3 and the fourth turn-around area T4, and it is preferable that the first narrowing part J1 is provided in either the third turn-around area T3 or/and the fourth turn-around area T4. More preferably, it is provided in the fourth turn-around area T4 (the turn-around area closest to the side where the fluid is discharged).

It is preferable that the first narrowing part J1 is provided in the third turn-around area T3, the fourth turn-around area T4 which is closest to the exhaust-connection channel 5 (the turn-around area closest to the side where the fluid is discharged), between the third turn-around area T3 and the fourth turn-around area T4, and/or between the fourth turn-around area T4 and the exhaust-connection channel 5.

When the first narrowing part J1 is provided in the first flow-channel groove 2A, it is preferable that the length of the first narrowing part J1 be 1% or more and 100% or less of the length L5 of the turn-around area of the first flow-channel groove 2A where the first narrowing part J1 is provided; more preferably 10% or more and 67% or less; and even more preferably 17% or more and 33% or less. When the length of the narrowing part J is too long, the flow rate may decrease, which is undesirable.

When a narrowing part J (a second narrowing part J2) is provided in the second flow-channel groove 2B, it is preferable that the length of the narrowing part J be 1% or more and 100% or less of the length L4 of the turn-around area of the second flow-channel groove 2B where the narrowing part J is provided; more preferably 4% or more and 29% or less; and even more preferably 3% or more and 18% or less. When the length of the narrowing part J is too long, the flow rate may decrease, which is undesirable.

When a narrowing part J (a third narrowing part J3) is provided in the third flow-channel groove 2C, it is preferable that the length of the narrowing part J be 1% or more and 100% or less of the length L3 of the turn-around area of the third flow-channel groove 2C where the narrowing part J is provided; more preferably 4% or more and 29% or less; and even more preferably 7% or more and 14% or less. When the length of the narrowing part J is too long, the flow rate may decrease, which is undesirable.

When a narrowing part J (a fourth narrowing part J4) is provided in the fourth flow-channel groove 2D, it is preferable that the length of the narrowing part J be 3% or more and 100% or less of the length L2 of the turn-around area of the fourth flow-channel groove 2D where the narrowing part J is provided; more preferably 10% or more and 67% or less; and even more preferably 17% or more and 33% or less. When the length of the narrowing part J is too long, the flow rate may decrease, which is undesirable.

It is preferable that the length of the first narrowing part J1 be 0.1 times or more and 3 times or less the width W1 of the first flow-channel groove 2A; more preferably 0.3 times or more and 2 times or less; and even more preferably 0.5 times or more and 1 time or less. When the length of the narrowing part J is too long, the flow rate may decrease, which is undesirable.

It is preferable that the length of the second narrowing part J2 be 0.1 times or more and 3 times or less the width W2 of the second flow-channel groove 2B; more preferably 0.3 times or more and 2 times or less; and even more preferably 0.5 times or more and 1 time or less. When the length of the narrowing part J is too long, the flow rate may decrease, which is undesirable.

It is preferable that the length of the third narrowing part J3 be 0.1 times or more and 3 times or less the width W3 of the third flow-channel groove 2C; more preferably 0.3 times or more and 2 times or less; and even more preferably 0.5 times or more and 1 time or less. When the length of the narrowing part J is too long, the flow rate may decrease, which is undesirable.

It is preferable that the length of the fourth narrowing part J4 be 0.1 times or more and 3 times or less the width W4 of the fourth flow-channel groove 2D; more preferably 0.3 times or more and 2 times or less; and even more preferably 0.5 times or more and 1 time or less. When the length of the narrowing part J is too long, the flow rate may decrease, which is undesirable.

It is preferable that the length of the first narrowing part J1 be 0.1% or more and 1.7% or less of the distance (entire distance) of the first flow-channel groove 2A; more preferably 0.2% or more and 1.1% or less; and even more preferably 0.3% or more and 0.6% or less. When the length of the narrowing part J is too long, the flow rate may decrease, which is undesirable.

It is preferable that the length of the second narrowing part J2 be 0.1% or more and 1.7% or less of the distance (entire distance) of the second flow-channel groove 2B; more preferably 0.2% or more and 1.1% or less; and even more preferably 0.3% or more and 0.6% or less. When the length of the narrowing part J is too long, the flow rate may decrease, which is undesirable.

It is preferable that the length of the third narrowing part J3 be 0.1% or more and 1.7% or less of the distance (entire distance) of the third flow-channel groove 2C; more preferably 0.2% or more and 1.1% or less; and even more preferably 0.3% or more and 0.6% or less. When the length of the narrowing part J is too long, the flow rate may decrease, which is undesirable.

It is preferable that the length of the fourth narrowing part J4 be 0.1% or more and 1.7% or less of the distance (entire distance) of the fourth flow-channel groove 2D; more preferably 0.2% or more and 1.1% or less; and even more preferably 0.3% or more and 0.6% or less. When the length of the narrowing part J is too long, the flow rate may decrease, which is undesirable.

When the flow channel 10 includes a plurality of flow-channel grooves 2, it is preferable that the plurality of flow-channel grooves 2 are parallel to each other.

It is preferable that the total length of the narrowing part J provided in the flow-channel groove 2 be 0.2% or more and 6.7% or less of the length of one flow-channel groove 2; more preferably 0.7% or more and 4.5% or less; and even more preferably 1.1% or more and 2.2% or less. When the length of the narrowing part J is too long, the portion that does not function as the flow channel 10 will increase, which is undesirable.

Hereinafter, several schematic diagrams or partial schematic diagrams of the separator 100 will be exemplified to further explain the narrowing part J. The description regarding the first narrowing part 1F corresponds to descriptions of other narrowing parts J.

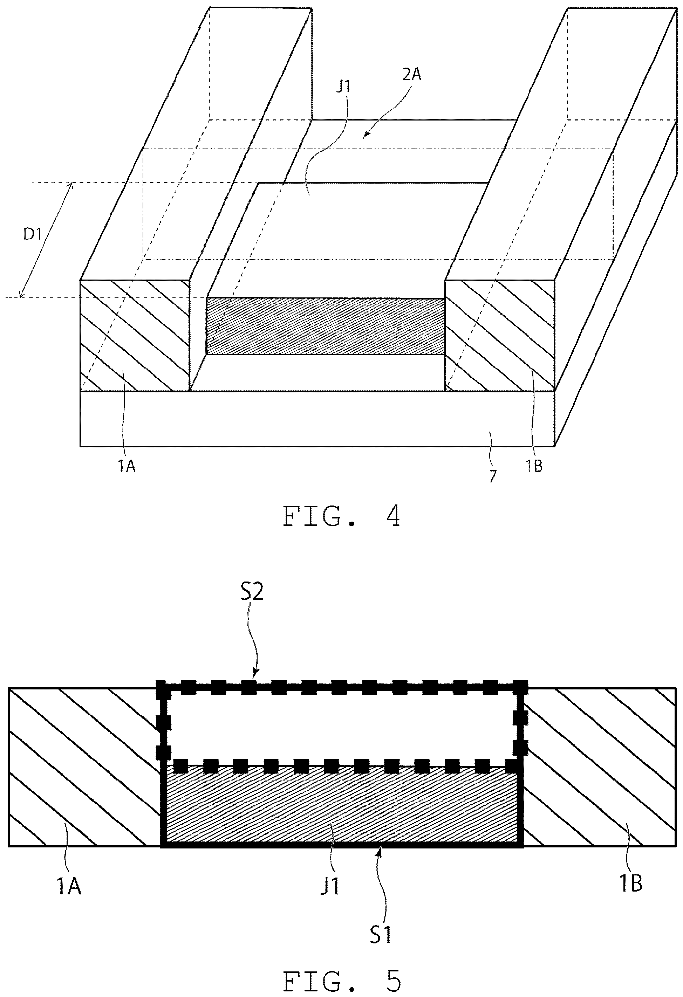

FIG. 4 shows a schematic perspective diagram of a part of the separator 100. FIG. 4 is a schematic perspective diagram of a part of the separator where the first narrowing part J1 is provided. FIG. 4 illustrates a member in which the first flow-channel wall 1A, the second flow-channel wall 1B, and the first narrowing part J1 are provided on the frame 7 and the first narrowing part J1 is provided between the first flow-channel wall 1A and the second flow-channel wall 1B on the frame 7 side of the first flow-channel groove 2A. The plate-like first narrowing part J1 is arranged so as to be in contact with the frame 7 and directly contacts both the first flow-channel wall 1A and the second flow-channel wall 1B. The upper side (opposite side from the frame 7 side) of the first narrowing part J1 is open, and fluid can pass through the opening. The length D1 of the first narrowing part J1 is shown in FIG. 4. Dashed lines like those in FIG. 4 are virtual lines.

The schematic diagram in FIG. 5 illustrates the area narrowed by the first narrowing part J1. In the schematic diagram of FIG. 5, the first narrowing part J1 is positioned between the first flow-channel groove 2A and the second flow-channel groove 2B. The area enclosed by thick lines in FIG. 5 represents the average cross-sectional area S1 of the first flow-channel groove 2A. The area enclosed by thick dashed lines in FIG. 5 represents the cross-sectional area S2 (the cross-sectional area of the flow channel of the first flow-channel groove 2A having the first narrowing part J1) where the first flow-channel groove 2A is open at the position where the first narrowing part J1 is provided. The area narrowed by the first narrowing part J1 is evaluated at the position of the rectangular enclosed by two-dots-one-chain line in FIG. 4. The position enclosed by the two-dots-one-chain line represents the position where the cross-sectional area of the first flow-channel groove 2A is most reduced (the position where the area S2 is smallest) due to the first narrowing part J1. Then, the average cross-sectional area S1 of the first flow-channel groove 2A and the cross-sectional area S2 where the first flow-channel groove 2A is open at the position where the first narrowing part J1, are evaluated by comparing them. Since the first narrowing part J1 does not completely block the first flow-channel groove 2A, the first flow-channel groove 2A is open at the region where the first narrowing part J1 is provided. Therefore, the cross-sectional area S2 where the first flow-channel groove 2A is open at the position where the first narrowing part J1 is greater than 0.

It is preferable that the cross-sectional area S2 where the first flow-channel groove 2A is open at the position where the first narrowing part J1 is provided be 1% or more and 90% or less of the average cross-sectional area S1 of the first flow-channel groove 2A; more preferably 20% or more and 75% or less; and even more preferably 40% or more and 60% or less. The average cross-sectional area of the first flow-channel groove 2A may be a cross-sectional area of the first flow-channel groove 2A at the position where no first narrowing part J1 is provided. When the first flow-channel groove 2A is partially narrowed by the first narrowing part J1, the flow of fluid passing through the narrowing part changes, making it easier for gases that tend to accumulate in the latter half of the flow channel 10 to be discharged.

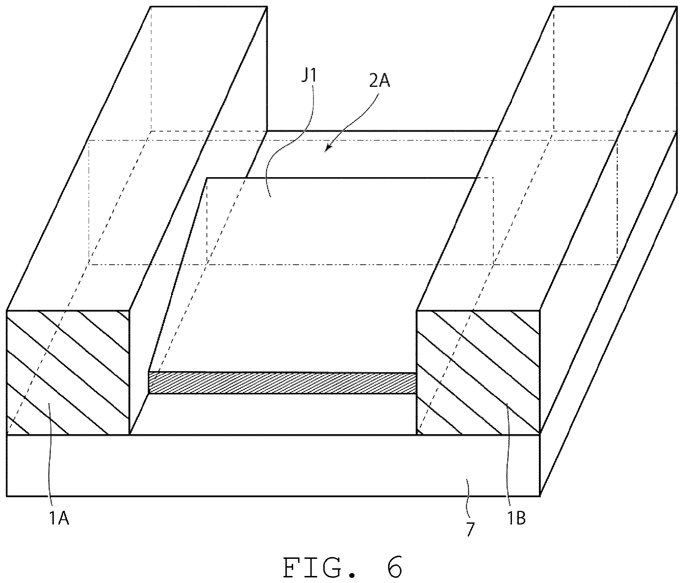

FIG. 6 shows a schematic perspective diagram of a part of the separator 100. The schematic diagram in FIG. 6 is a perspective schematic diagram of a part of the separator where the first narrowing part J1 is provided and is a variation example of the perspective diagram in FIG. 4. The first narrowing part J1 shown in the schematic diagram in FIG. 6 has an inclined surface with a higher height on the side opposite to the frame 7 side (not illustrated porous layer side). The cross-sectional area S2 where the first flow-channel groove 2A is open at the position where the first narrowing part J1 is provided, is the area of the rectangular position enclosed by two-dots-one-chain line as in FIG. 4. Similar variations are also applicable.

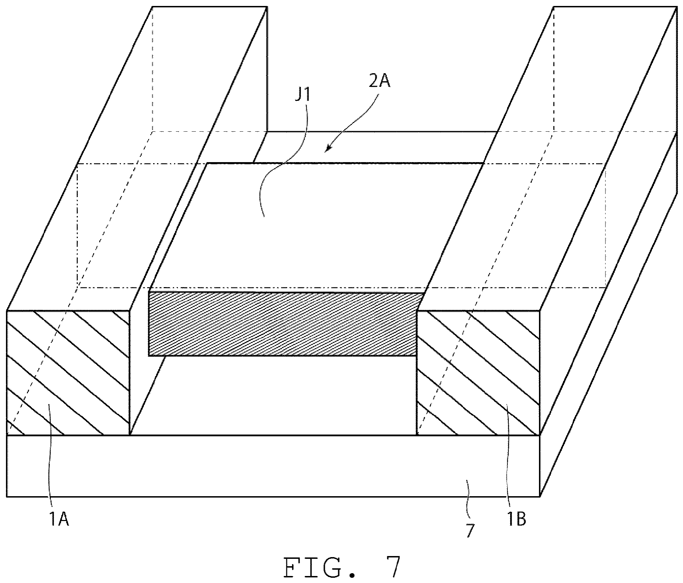

FIG. 7 shows a schematic perspective diagram of a part of the separator 100. The schematic diagram in FIG. 7 illustrates a schematic perspective diagram of the separator where the first narrowing part J1 is provided and is a variation example of the schematic perspective diagram in FIG. 4. The first narrowing part J1 shown in the diagram in FIG. 7 is arranged to be spaced apart from the surface of the frame 7. A configuration where fluid flowing through the first flow-channel groove 2A can pass through both the upper and lower sides of the first narrowing part J1 is also included in the embodiment configurations.

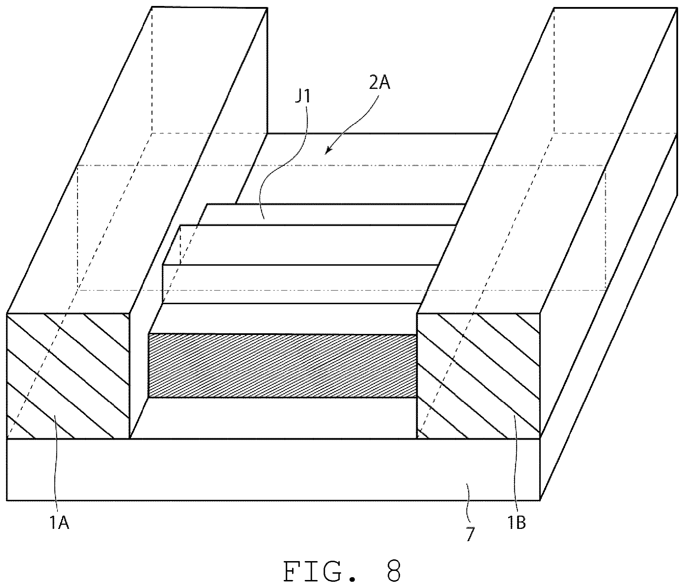

FIG. 8 shows a schematic perspective diagram of a part of the separator 100. The schematic diagram in FIG. 8 is a schematic perspective diagram of the separator where a stepped first narrowing part J1 is provided between the first flow-channel wall 1A and the second flow-channel wall 1B, and is a variation example of the schematic perspective diagram in FIG. 4. A configuration having a stepped shape like the first narrowing part J1 as shown in the diagram in FIG. 8 is also included in the embodiment configurations.

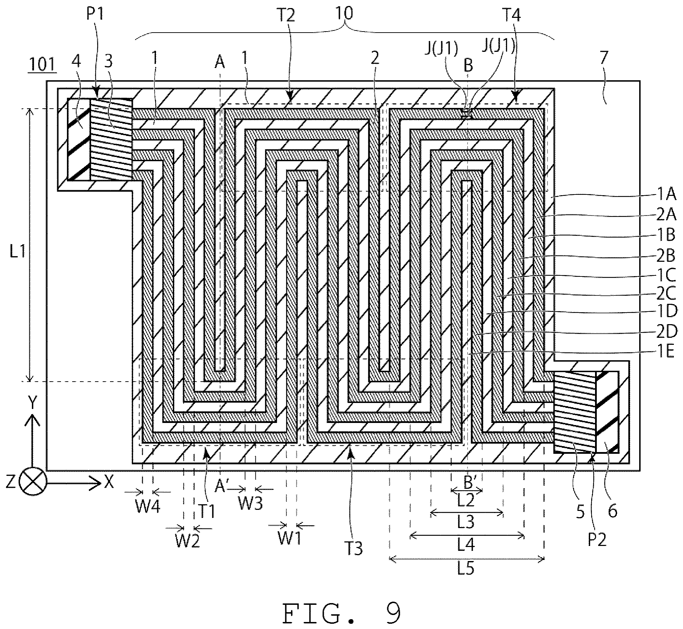

FIG. 9 shows a schematic diagram of a separator 101. The separator 101 shown in FIG. 9 illustrates a variation example of the separator 100 shown in FIG. 1. The separator 101 has
a separated first narrowing part J1. While the position where the first narrowing part J1 is provided in the separator 100 shown in the schematic diagram in FIG. 1 formed the first flow-channel groove 2A through which fluid flows, surrounded by the first flow-channel wall 1A, the second flow-channel wall 1B and the first narrowing part J1, the separator 101 shown in the diagram in FIG. 9 has a configuration where fluid flows between separated first narrowing parts J1.

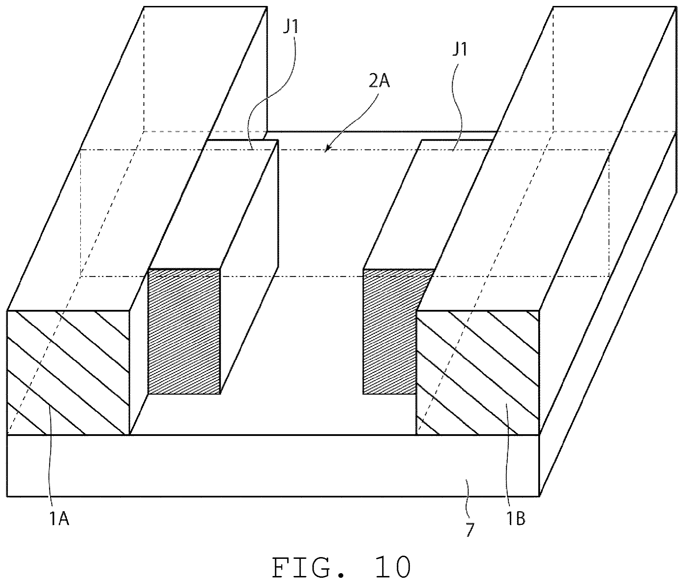

FIG. 10 shows a schematic perspective diagram of a part of the separator 101. The diagram in FIG. 10 illustrates a schematic perspective diagram of the separator where a separated first narrowing part J1 provided. The separated first separated-narrowing part F1 becomes a protrusion of the first flow-channel wall 1A and a protrusion of the second flow-channel wall 1B, and can change the flow of fluid. The flow channel narrows, increasing the flow rate of fluid flowing between the separated first narrowing part J1, and reducing accumulation of gas.

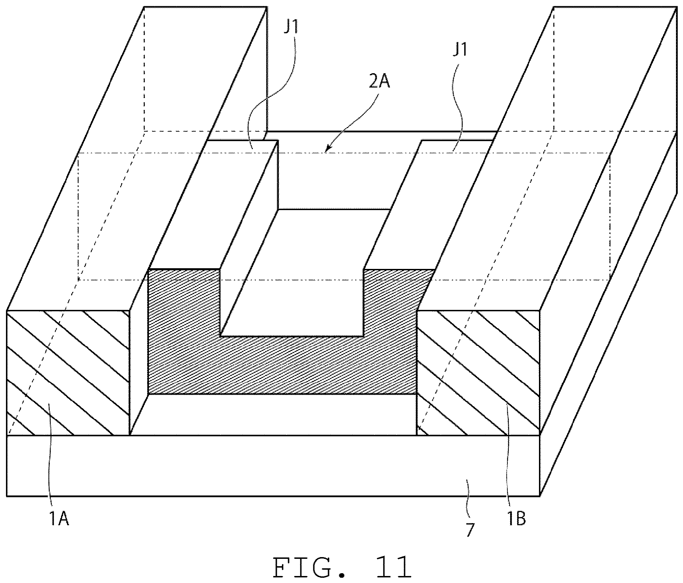

FIG. 11 shows a schematic perspective diagram of a part of the separator 101. The diagram in FIG. 11 illustrates a variation example of the configuration shown in FIG. 10. The separated first narrowing part J1 may be connected on the frame 7 side.

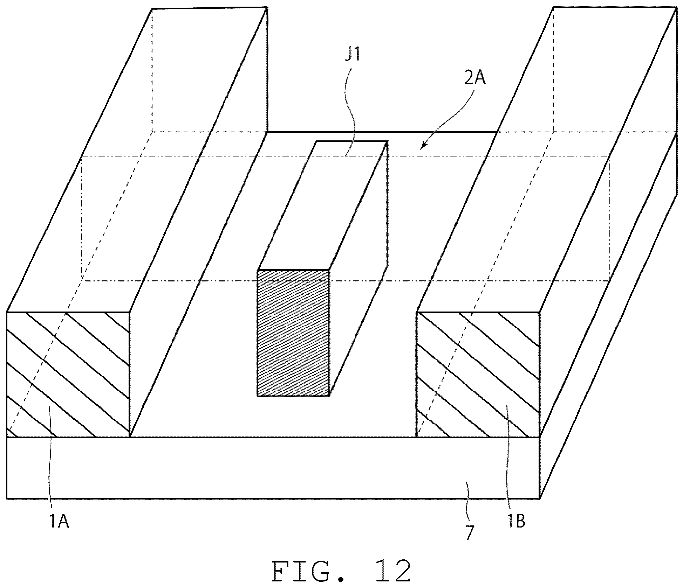

FIG. 12 shows a schematic perspective diagram of a part of the separator 101. The diagram in FIG. 12 illustrates a variation example of the configuration shown in FIG. 10. In the configuration shown in FIG. 11, the first flow-channel groove 2A is branched by the first narrowing part J1.

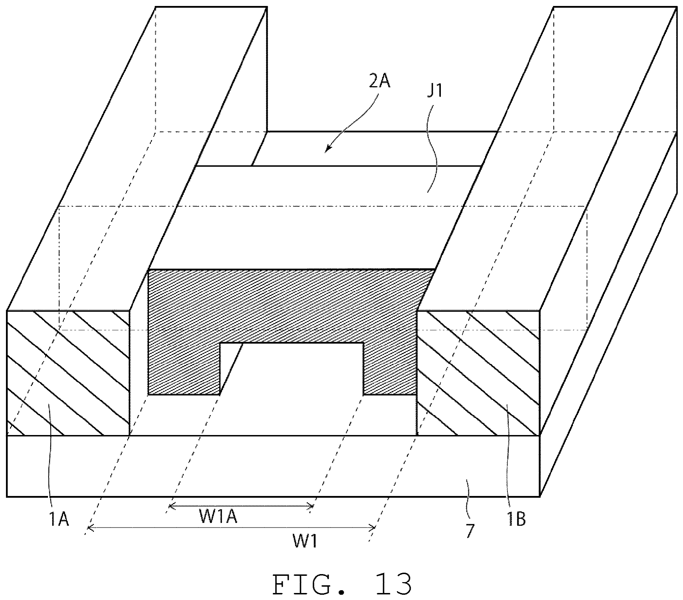

FIG. 13 shows a schematic perspective diagram of a part of the separator 101. The diagram in FIG. 13 illustrates a variation example of the configuration shown in FIG. 11. In the configuration shown in FIG. 11, the first separated-narrowing part F1 is configured so that fluid passes through the side opposite to the frame 7 side. On the other hand, in the configuration shown in FIG. 13, the first separated-narrowing part F1 is configured so that fluid passes through the frame 7 side. The configuration of the separated first narrowing part F1 shown in FIG. 13 is a reversed configuration of the first separated-narrowing part F1 in FIG. 11.

As described above, various shapes of the first narrowing part J1 are included in the embodiments. The first narrowing part J1 is not limited to the shapes of the first narrowing part J1 described above.

The separator 100 (101) of the embodiment may be formed by machining an existing separator to form the narrowing part J, or the first flow-channel wall 1A, the second flow-channel wall 1B and the frame 7 and the first narrowing part J1 may be integrally molded.

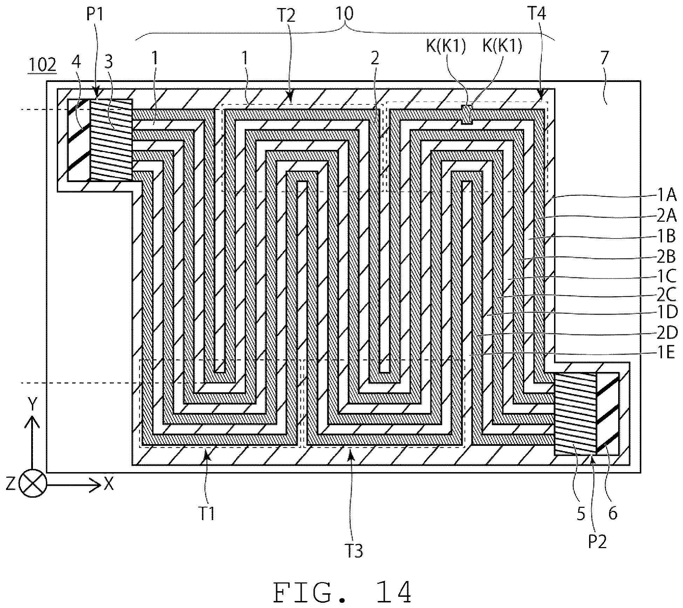

FIG. 14 shows a schematic diagram of a separator 102. The separator 102 shown in FIG. 14 is a variation example of the separator 100 shown in FIG. 1. The separator 102 has an expansion part K. One or more expansion parts K are provided in a part of the flow-channel groove 2. The first flow-channel groove 2A is a flow-channel groove 2 with a first expansion part K1. Flow-channel grooves 2 other than the first flow-channel groove 2A are flow-channel grooves 2 with an expansion part K or flow-channel grooves 2 without an expansion part K. The expansion part K is a recessed part of the flow channel groove 2.

Preferably, the expansion part K of the flow-channel groove 2 is provided in the latter half of the flow-channel groove 2 and not in the former half. Providing an expansion part K in a part of the flow-channel groove 2 can suppress the accumulation of gas contained in the fluid and gas including the liquid flowing through the separator 100. Preferably, the expansion part K of the flow-channel groove 2 is provided in the turn-around area (the third turn-around area T3 and/or the fourth turn-around area T4) in the latter half of the flow-channel groove 2.

Preferably, the first expansion part K1 is provided on the third turn-around area T3, the side closest to the exhaust-connection channel 5, the fourth turn-around area T4 (the turn-around area closest to the side where the fluid is discharged), between the third turn-around area T3 and the fourth turn-around area T4, and/or between the side closest to the exhaust-connection channel 5 and the exhaust-connection channel 5. More preferably, the first expansion part K1 is provided at the fourth turn-around area T4 (the turn-around area closest to the side where the fluid is discharged).

The former half of the first flow-channel groove 2A, the former half of the second flow-channel groove 2B, the former half of the third flow-channel groove 2C, and the former half of the fourth flow-channel groove 2D are located on the first location P1 side. The latter half of the first flow-channel groove 2A, the latter half of the second flow-channel groove 2B, the latter half of the third flow-channel groove 2C, and the latter half of the fourth flow-channel groove 2D are located on the second location P2 side.

When gas accumulates in the flow-channel groove 2, gas generated by the electrode in contact with the separator 100 tends to cause a side reaction. When CO₂ is electrolyzed, oxygen gas generated at the cathode and hydrogen gas reacted at the cathode side due to the reduction of water by a side reaction tend to generate hydrogen peroxide when the concentration of oxygen gas is high on the anode discharge side and the concentration of CO₂ is low on the cathode discharge side. Hydrogen peroxide deteriorates the separator, so it is preferable to expand a part of the flow-channel groove 2 to prevent gas from accumulating. It is not effective to expand all the turn-around areas of the serpentine flow channel shape or to expand a part of the flow-channel groove 2 in the former half of the serpentine flow channel shape. By expanding a part of the flow-channel groove 2 in the latter half rather than the former half of the serpentine flow channel shape, gas accumulation can be reduced.

Providing the expansion part K makes it easier for fluid to flow through the expansion part K. By partially providing the expansion part K, a change occurs in the flow of the fluid. This change in flow reduces accumulation of gas contained in the fluid flowing through the flow channel 10. Since little gas is generated by the electrode reaction in the former half of the flow channel 10, it is not effective to provide an expansion part K in the former half of the flow channel 10 to make it easier for fluids to flow. Instead of providing an expansion part K in the former half of the flow channel 10, reducing gas accumulation can be achieved by providing an area where fluid flow is different in a part of the latter half of the flow-channel groove 2, where gas tends to accumulate.

It is preferable that the expansion part K not connect adjacent flow channels. In other words, it is preferable that the expansion part K does not penetrate through the flow-channel walls 1.

The expansion part K is not a fine unevenness existing throughout the flow-channel walls 1 or the frame 7, but a shape locally provided.

It is preferable that the length of the expansion part K satisfy a preferable length of the narrowing part J.

The expansion part K is, for example, a recess formed in the flow-channel walls 1 and/or the frame 7.

The separator 102 may further include the narrowing part J. The narrowing part J may be provided in the flow-channel groove 2 where the expansion part K is provided, or the narrowing part J may be provided in a different flow-channel groove 2 from the one where the expansion part K is provided.

Next, the expansion part K of the embodiment will be described using the first expansion part K1 as an example. It is preferable that the expansion part K be provided in at least one of flow-channel grooves 2. For example, when the flow channel 10 has a first flow-channel groove 2A, a second flow-channel groove 2B, a third flow-channel groove 2C, and a fourth flow-channel groove 2D, the expansion part K is provided in one or more of these flow-channel grooves. Hereinafter, an example will be described in which the first expansion part K1 is provided in the first flow-channel groove 2A, but the same applies when the expansion part K is provided in other flow-channel grooves.

One or more first expansion parts K1 are provided in the first flow-channel groove 2A. Two or more first expansion parts K1 may be provided in the first flow-channel groove 2A. The first expansion part K1 is provided in the latter half of the first flow-channel groove 2A and expands a part of the latter half of the first flow-channel groove 2A. The first expansion part K1 is provided at the fourth turn-around area T4 of the first flow-channel groove 2A.

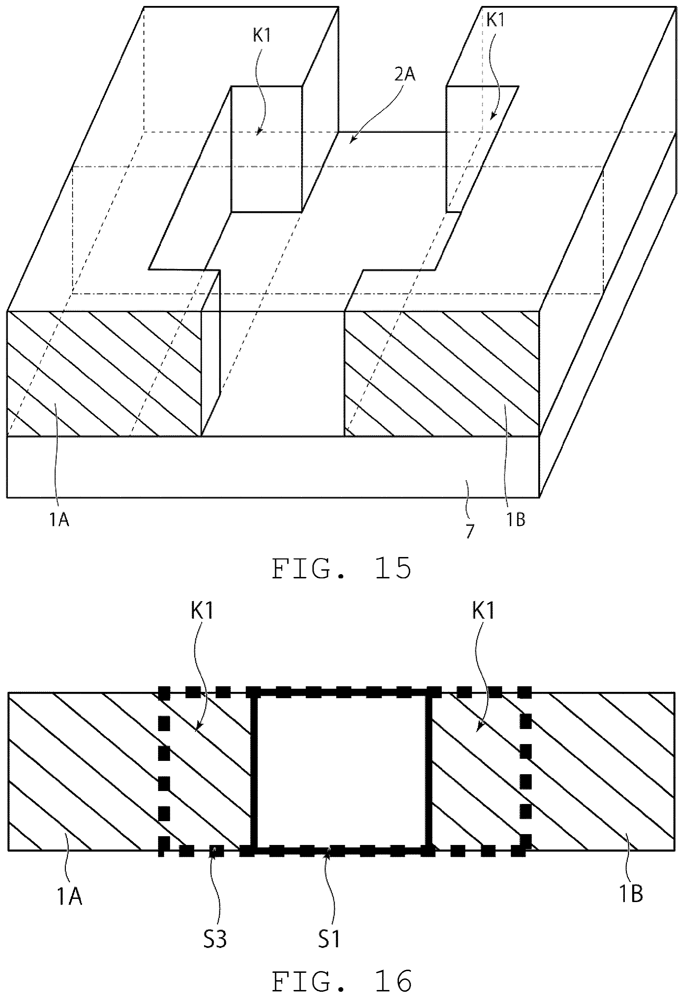

FIG. 15 shows a schematic perspective diagram of a part of the separator 102. FIG. 15 shows a schematic perspective diagram of a part of the separator 102 in which the first expansion part K1 is provided. FIG. 15 shows a member in which the first flow-channel wall 1A, and the second flow-channel wall 1B are provided on the frame 7, and the first expansion part K1 is provided between the first flow-channel wall 1A and the second flow-channel wall 1B. The first flow-channel groove 2A is expanded by the first expansion part K1, and fluid can also flow through the first expansion part K1. The dashed line in FIG. 15 is also a virtual line.

FIG. 16 shows the area expanded by the first expansion part K1. FIG. 16 shows that the first expansion part K1 is positioned between the first flow-channel groove 2A and the second flow-channel groove 2B. The area enclosed by the thick line in FIG. 16 represents the average cross-sectional area S1 of the first flow-channel groove 2A. The area enclosed by the thick dashed line in FIG. 16 represents the cross-sectional area S3 (the cross-sectional area of the flow channel of the first flow-channel groove 2A including the part where the first expansion part K1 is provided) of the part where the first flow-channel groove 2A is opened. The area expanded by the first expansion part K1 is evaluated at the position enclosed by the two-dots-one-chain line in FIG. 15. The position enclosed by the two-point chain line is the position where the cross-sectional area of the first flow-channel groove 2A is most increased by the first expansion part K1 (the position where S3 is largest). Comparing the average cross-sectional area S1 of the first flow-channel groove 2A with the cross-sectional area S3 of the opened area (where K1 is present), it is seen that S3 is larger than S1. Then, the average cross-sectional area S1 of the first flow-channel groove 2A and the cross-sectional area S3 where the first flow-channel groove 2A is opened at the position where the first expansion part K1 is provided, are evaluated by comparing them. The cross-sectional area S3 where the first flow-channel groove 2A is opened at the position where the first expansion part K1 is provided is larger than the average cross-sectional area S1 of the first flow-channel groove 2A.

It is preferable that the cross-sectional area S3 where the first flow-channel groove 2A is opened at the position where the first expansion part K1 is provided be 110% or more and 170% or less of the average cross-sectional area S1 of the first flow-channel groove 2A; more preferably 125% or more and 165% or less; and even more preferably 140% or more and 160% or less. The average cross-sectional area of the first flow-channel groove 2A may be the cross-sectional area of the first flow-channel groove 2A where no first narrowing part J1, etc. is provided. When the first flow-channel groove 2A is partially expanded by the first narrowing part J1, the flow of fluid passing through the expansion part changes, making it easier for gas that tends to accumulate in the latter half of the flow channel 10 to be discharged.

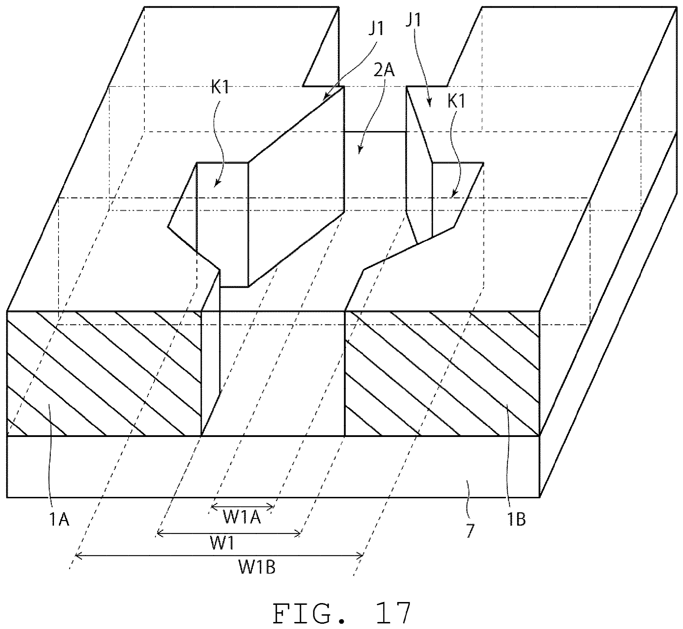

FIG. 17 shows a schematic perspective diagram of a part of the separator 102. FIG. 17 shows a perspective diagram of a part of the separator where both the first expansion part K1 and the first narrowing part J1 are provided, which is a variation of the perspective diagram in FIG. 15. As shown in FIG. 17, the separator 102 has both the first expansion part K1 and the first narrowing part J1 continuously provided in the first flow-channel groove 2A. When both the first expansion part K1 and the first narrowing part J1 are provided in the first flow-channel groove 2A, they may be continuously provided as shown in FIG. 17, or they may be separated. The separator 102 may also include a continuously provided area of the first expansion part K1 and the first narrowing part J1; the separated first expansion part K1; and the first narrowing part J1.

When both the first expansion part K1 and the first narrowing part J1 are included in the first flow-channel groove 2A, it is preferable that the total length of the first expansion part K1 and the first narrowing part J1 satisfy the preferred length requirements for the narrowing part J mentioned above.

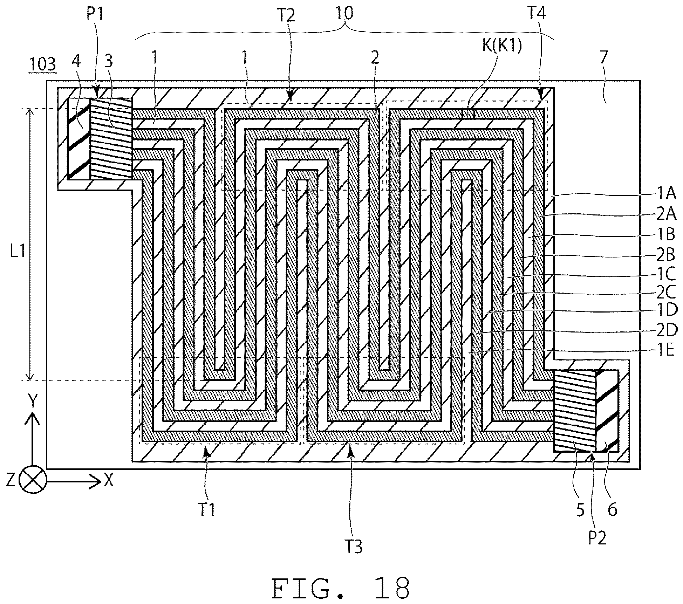

FIG. 18 shows a schematic diagram of a separator 103. FIG. 18 shows a variation of the separator 102 in FIG. 14. The separator 103 has an expansion part K. One or more expansion parts K are provided in a part of the flow channel grooves. The first flow-channel groove 2A is a flow channel groove 2 in which the first expansion part K1 is provided. The other flow channel grooves 2 except for the first flow-channel groove 2A may be flow channel grooves 2 in which an expansion part K is provided or flow channel grooves 2 in which no expansion part K is provided.

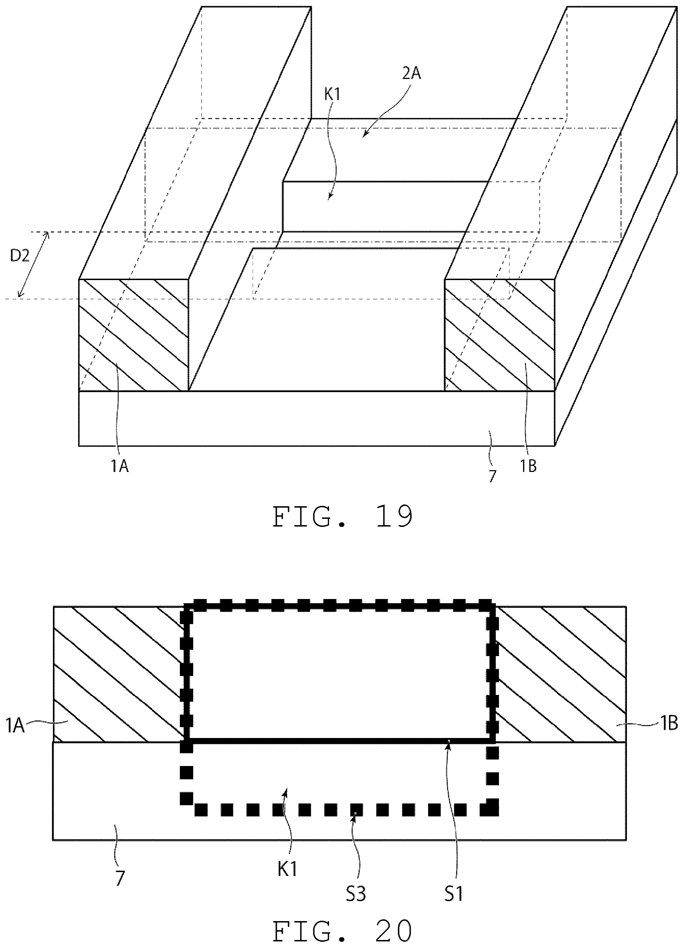

FIG. 19 shows a schematic perspective diagram of a part of the separator 103. FIG. 19 shows a schematic perspective diagram of a part of the separator 103 where the first expansion part K1 is provided. As shown in FIG. 19, a member that the first flow-channel wall 1A and the second flow-channel wall 1B are provided on the frame 7 and the first expansion part K1 is provided on the surface of the frame 7. The first expansion part K1 on the surface of the frame 7 is a recess on the surface. The first flow-channel groove 2A is expanded by the first expansion part K1 and fluid can also flow through the first expansion part K1. The first expansion part K1 on the recessed part of the surface of the frame 7 extends to the sides of the first flow-channel wall 1A and the second flow-channel wall 1B, and there may be a recess part even in the first flow-channel wall 1A and/or the second flow-channel wall 1B.

A schematic diagram of FIG. 20 shows the area expanded by the first expansion part K1. The schematic diagram of FIG. 20 shows the first expansion part K1 positioned between the first flow-channel groove 2A and the second flow-channel groove 2B. The first expansion part K1 shown in the schematic diagram of FIG. 20 is not a horizontal recess but a recess part provided on the side of the frame 7 as shown in the schematic diagram of FIG. 19. The area enclosed by the thick line in FIG. 20 represents the average cross-sectional area S1 of the first flow-channel groove 2A. The area enclosed by the thick dashed line in FIG. 20 represents the cross-sectional area S3 (the cross-sectional area of the flow channel of the first flow-channel groove 2A including the area where the first expansion part K1 is provided) of the area where the first flow-channel groove 2A is opened including the first expansion part K1. The area expanded by the first expansion part K1 is evaluated at the position enclosed by the two-dots-one-chain line in FIG. 19. The position enclosed by the two-point chain line is the position where the cross-sectional area of the first flow-channel groove 2A is most increased by the first expansion part K1 (the position where S3 is largest). Then, the average cross-sectional area S1 of the first flow-channel groove 2A and the cross-sectional area S3 where the first flow-channel groove 2A is opened at the position where the first expansion part K1 is provided, and are evaluated by comparing them. The cross-sectional area S3 where the first flow-channel groove 2A is opened at the position where the first expansion part K1 is provided is larger than the average cross-sectional area S1 of the first flow-channel groove 2A.

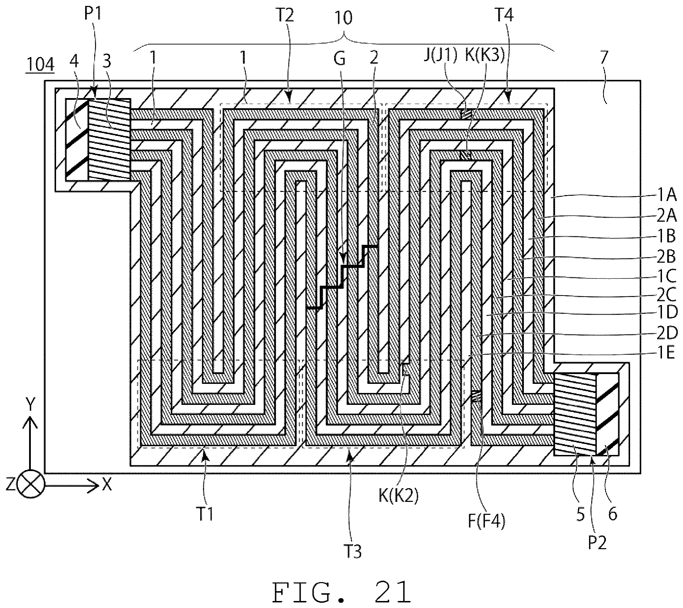

FIG. 21 shows a schematic diagram of a separator 104. The separator 104 shown in FIG. 21 is a variation of the separator 100 in FIG. 1. The separator 104 has a narrowing part J, an expansion part K, and a blocking wall F. The first flow-channel groove 2A is a flow channel groove 2 in which the first narrowing part J1 is provided. The second flow-channel groove 2B is a flow channel groove 2 in which a second expansion part K2 is provided. The third flow-channel groove 2C is a flow channel groove 2 in which the third narrowing part J3 is provided. The fourth flow channel groove is a flow channel groove 2 in which a fourth blocking wall F4 is provided. When the blocking wall F is provided in the first flow-channel groove 2A, it will be designated as a first blocking wall F1.

The first narrowing part J1 is, for example, a protrusion provided on the frame 7, which is the bottom side of the first flow-channel groove 2A, and is provided at the fourth turn-around area T4 in the latter half of the flow channel 10. The first narrowing part J1 changes the flow of fluid at the fourth turn-around area T4.

The second expansion part K2 is, for example, a recess provided on the second flow-channel wall 1B, and is provided at the third turn-around area T3 in the latter half of the flow channel 10. The second expansion part K2 changes the flow of fluid at the third turn-around area T3.

A third expansion part K3, for example, is a recess provided on the frame 7 and is provided at the fourth turn-around area T4 in the latter half of the flow channel 10. The third expansion part K3 changes the flow of fluid at the fourth turn-around area T4.

The fourth blocking wall F4 (the blocking wall F) is, for example, provided between the fourth flow-channel wall 1D and the fifth flow-channel wall 1E and closes the fourth flow-channel groove 2D. While the narrowing part J partially blocks a flow channel groove 2, the blocking wall F completely blocks a flow channel groove 2.

For example, when the blocking wall F is provided in the first flow-channel groove 2A, it will be designated as the first blocking wall F1. The first blocking wall F1 closes the first flow-channel groove 2A.

For example, when the blocking wall F is provided in the second flow-channel groove 2B, it will be designated as the second blocking wall F2. The second blocking wall F2 closes the second flow-channel groove 2B.

For example, when the blocking wall F is provided in the third flow-channel groove 2C, it will be designated as the third blocking wall F3. The third blocking wall F3 closes the third flow-channel groove 2C

The preferred length and position of the blocking wall F are similar to those of the narrowing part J. When the blocking wall F is provided in a flow channel groove 2, it is preferable that the blocking wall F be provided in one or more flow channel grooves 2. When the blocking wall F is provided in flow channel grooves 2, it is preferable that one or more blocking walls F be provided in one or more flow channel grooves 2. When the blocking wall F is provided in a flow channel groove 2, it is preferable that the blocking wall F is provided in the latter half of the flow channel 10. The narrowing part J may be connected to the blocking wall F.

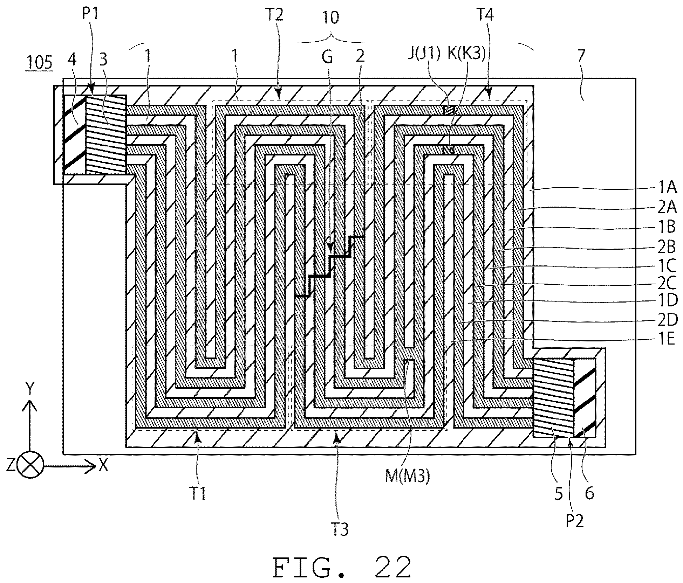

FIG. 22 shows a schematic diagram of a separator 105. The separator 105 shown in the schematic diagram of FIG. 22 is a variation of the separator 100 in FIG. 1. The separator 105 has a narrowing part J, an expansion part K, and a connecting passage M. The first flow-channel groove 2A is a flow channel groove 2 in which the first narrowing part J1 is provided. The second flow-channel groove 2B is a flow channel groove 2 connected to the third flow-channel groove 2C by a third connecting passage M3. The third flow-channel groove 2C is a flow channel groove 2 in which the third expansion part K3 is provided. The fourth flow-channel groove 2D is a flow channel groove 2 in which no narrowing parts or expansion parts K are provided. When the connecting passage M is provided in the first flow-channel groove 2A, the connecting passage M will be designated as the first connecting passage M1.

The first narrowing part J1 is, for example, a protrusion provided on the frame 7, which is the bottom side of the first flow-channel groove 2A and is provided at the fourth turn-around area T4 in the latter half of the flow channel 10. The first narrowing part J1 changes the flow of fluid at the fourth turn-around area T4.

The third connecting passage M3 (connecting passage M) is, for example, a through-hole provided on the third flow-channel wall 1C and is provided at the third turn-around area T3 in the latter half of the flow channel 10. The connecting passage M is an opening provided on the flow-channel walls 1, which connects flow channel grooves 2 sandwiched by the flow-channel walls 1. For example, when the connecting passage M is provided on the second flow-channel wall 1B, the connecting passage M will be designated as a second connecting passage M2 and its ordinal number changes depending on the flow-channel walls 1 on which it is provided. The third connecting passage M3 changes the flow of fluid at the third turn-around area T3. The preferred length in the longitudinal direction of the connecting passage M, etc., and its position are similar to those of the narrowing part J.

The third expansion part K3 is, for example, a recess provided on the frame 7 and is provided at the fourth turn-around area T4 in the latter half of the flow channel 10. The third expansion part K3 changes the flow of fluid at the fourth turn-around area T4.

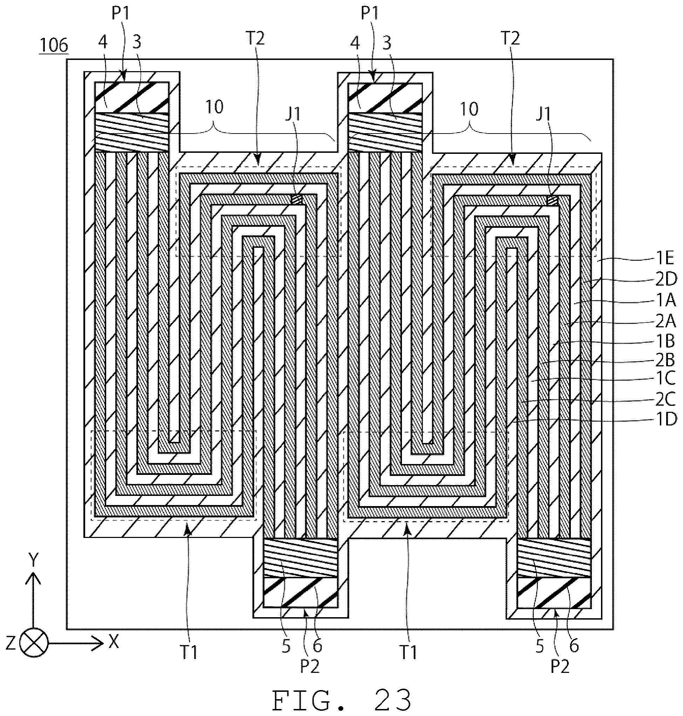

FIG. 23 shows a schematic diagram of a separator 106. The separator 106 shown in the schematic diagram of FIG. 23 is a variation of the separator 100. The separator 106 has a configuration where two flow channels, a first flow channel 10 and a second flow channel 11, are arranged independently and parallel to each other. The first flow channel 10 and the second flow channel 11 each include a first turn-around area T1 and a second turn-around area T2. The first turn-around area T1 is a turn-around area included in the former half of the first flow channel 10 and the former half of the second flow channel 11, and the second turn-around area T2 is a turn-around area included in the latter half of the flow channels. From the outside to the inside of the second turn-around area T2, the first flow-channel groove 2A, the second flow-channel groove 2B, the third flow-channel groove 2C, and the fourth flow-channel groove 2D are provided.

The first flow channel 10 includes the first flow-channel groove 2A in which the first narrowing part J1 is provided. The first narrowing part J1 is provided in the latter half of the first flow channel 10.

The second flow channel 11 includes the first flow-channel groove 2A in which the first narrowing part J1 is provided. The first narrowing part J1 is provided in the latter half of the second flow channel 11.

It is preferable that the first flow channel 10 and the second flow channel 11 have the same flow pattern, respectively having different flow patterns in the former half and the latter half.

In the separator 106, the first flow channel 10 and the second flow channel 11 are narrowed by the first narrowing part J1 in the latter half of each, and the ease of fluid flow changes at the turn-around area T. By changing the ease of fluid flow in the former half and the latter half of the first flow channel 10 and the former half and the latter half of the second flow channel 11, gas is less likely to accumulate in the latter half of the first flow channel 10 and the latter half of the second flow channel 11.

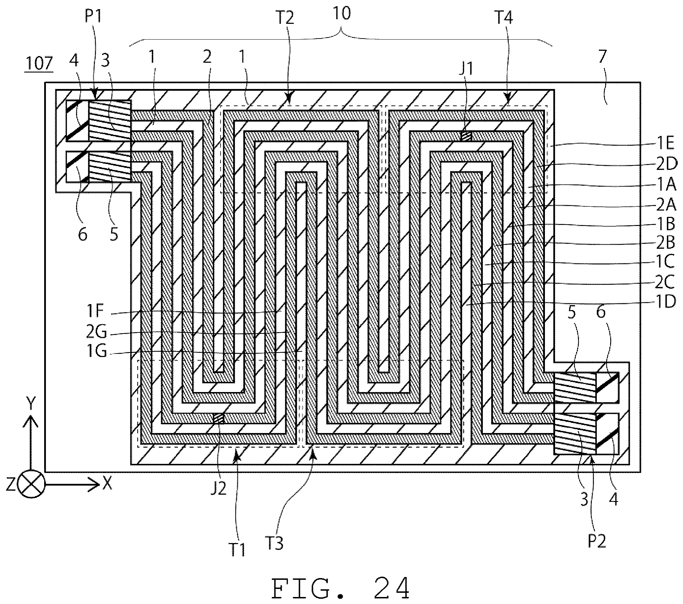

FIG. 24 shows a schematic diagram of a separator 107. The separator 107 shown in FIG. 24 is a variation of the separator 100. The separator 107 has the first flow-channel groove 2A and the second flow-channel groove 2B through which fluid flows from the first location P1 side to the second location P2 side, and the third flow-channel groove 2C and the fourth flow-channel groove 2D through which fluid flows from the second location P2 side to the first location P1 side. The second location P2 side, which is the supply side of the second flow channel 11, is connected to the supply connection channel 3 and the supply manifold 4. The first location P1 side, which is the exhaust side of the second flow channel 11, is connected to the exhaust connection channel 5 and the exhaust manifold 6. That is, fluid flowing through the first flow channel 10 flows in the opposite direction to the flow of fluid through the second flow channel 11.

The first flow channel 10 includes the first flow-channel groove 2A in which the first narrowing part J1 is provided. The flow pattern of the third turn-around area T3 and/or the fourth turn-around area T4, which are turn-around areas T at the latter half of the first flow channel 10, is different from the flow pattern of the first turn-around area T1 and the second turn-around area T2, which are turn-around areas T at the former half of the first flow channel 10. The first narrowing part J1 is provided at the latter half of the first flow channel 10.

The second flow channel 11 includes the first flow-channel groove 2A in which the first narrowing part J1 is provided. The flow pattern of the first turn-around area T1 and/or the second turn-around area T2, which are turn-around areas T at the latter half of the second flow channel 11, is different from the flow pattern of the third turn-around area T3 and the fourth turn-around area T4, which are turn-around areas T at the former half of the second flow channel 11. The first narrowing part J1 is provided at the latter half of the second flow channel 11.

The first flow-channel groove 2A, the second flow-channel groove 2B, the third flow-channel groove 2C, and the fourth flow-channel groove 2D are divided into two flow channels in which the direction of fluid flow is opposite but are arranged in parallel.

In the separator 107, the first narrowing part J1 narrows the first flow channel 10 and the second flow channel 11 at their latter halves, changing the ease of fluid flow at the turn-around areas T. By changing the ease of fluid flow in the former half and the latter half of the first flow channel 10 and the former half and the latter half of the second flow channel 11, gas is less likely to accumulate in the latter half of the first flow channel 10 and the latter half of the second flow channel 11.

### (SECOND EMBODIMENT)

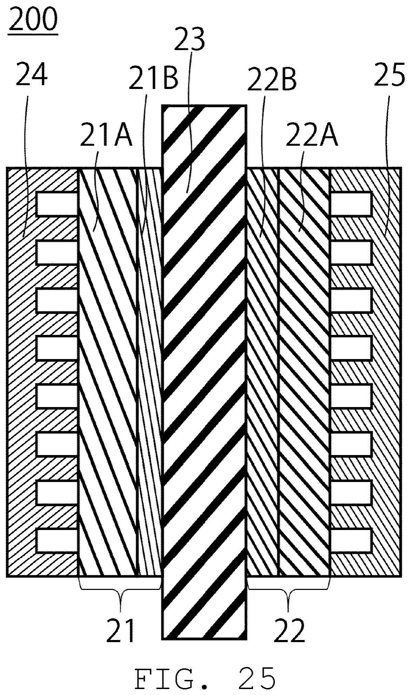

A second embodiment relates to an electrochemical cell. FIG. 25 shows a diagram of an electrochemical cell 200 according to the second embodiment. The electrochemical cell 200 is, for example, used for water electrolysis, CO₂ electrolysis, ammonia electrolysis, or fuel cells. When CO₂ is used in the electrolytic reaction, CO₂ may be recovered from exhaust gases, etc., using an amine solution. Power generated by the electrochemical cell can be used to perform electrolysis using a similar electrochemical cell, charge a secondary battery, or be consumed by a load. A fuel cell or solar cell may be used as a power source for the electrochemical cell. Using the electrochemical cell, for example, surplus electrical energy can be converted into chemical energy and stored.

The electrochemical cell 200 includes an anode 21, a cathode 22, a diaphragm 23, a first separator 24, and a second separator 25.

The first electrode (anode) 21 has a porous support on the first separator 24 side and a catalyst layer on the diaphragm 23 side. The support and catalyst layers of the first electrode 21 use materials suitable for the anode reaction of the first electrode 21.

The second electrode (cathode) 22 has a porous support on the second separator 25 side and a catalyst layer on the diaphragm 23 side. The support and catalyst layers of the second electrode 22 use materials suitable for the cathode reaction of the second electrode 22.

The diaphragm 23 is provided between the cathode 22 and the anode 21, and is stacked with the cathode 22 and the anode 21 to form a membrane electrode assembly (MEA). The diaphragm 23 allows ions to move between the anode 21 and the cathode 22, and can separate the anode side of the anode 21 and the first separator 24 from the cathode side of the cathode 22 and the second separator 25. The diaphragm 23 is composed of an ion exchange membrane such as a cation exchange membrane or an anion exchange membrane, or a porous membrane made of organic polymer materials.

Examples of ion exchange membranes used in the diaphragm 23 include cation exchange membranes such as Nafion (registered trademark) and Flemion (registered trademark), and anion exchange membranes such as NeoSepta (registered trademark), Selemion (registered trademark), Sustainion (registered trademark), and PiPerION (registered trademark). Organic polymer materials that constitute the porous membrane are not particularly limited, but include Teflon (registered trademark), polyvinylidene fluoride, and other fluorocarbon resins, polyether, polysulfone, polyethylene, polypropylene, polyethersulfone, and cellulose.

The first separator 24 is supplied with a fluid used for the reaction of the first electrode 21, and a fluid containing reactants is discharged. The first separator 24 is electrically connected to the first electrode 21.

The second separator 25 is supplied with a fluid used for the reaction of the second electrode 22, and a fluid containing reactants is discharged. The second separator 25 is electrically connected to the second electrode 22.

The separators 100 to 107 according to the first embodiment are preferably used for the first separator 24 or/and the second separator 25. Either the first separator 24 or the second separator 25 may be a separator without the narrowing part J and the expansion part K.

By using the separators 100 to 107 according to the first embodiment, gas accumulation within the separators can be reduced, thereby reducing the degradation of the diaphragm 23.

### (THIRD EMBODIMENT)

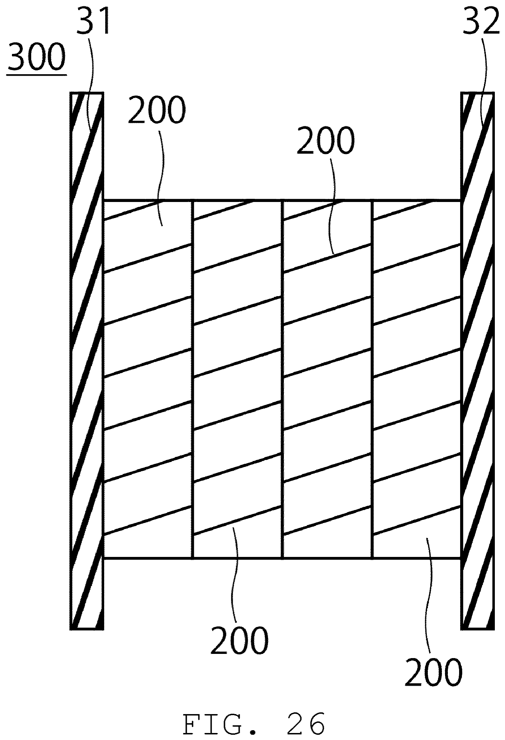

A third embodiment relates to a stack. FIG. 26 is a schematic cross-sectional diagram of the third embodiment of the stack 300. The third embodiment stack 300 shown in FIG. 26 comprises a plurality of electrochemical cells 200 connected in series. Tightening plates 31 and 32 are attached to both ends of the stack 300. A variant electrochemical cell can also be used in the third embodiment.

When electrolysis is performed, the amount of carbon compounds such as H₂ and CO produced by one electrochemical cell 200 is small. Similarly, when power generation is performed, the amount of electricity generated by one electrochemical cell 200 is small. Therefore, a stack 300 comprising a plurality of electrochemical cells 200 connected in series is configured to increase the production amount and power generation amount.

### (Fourth embodiment)

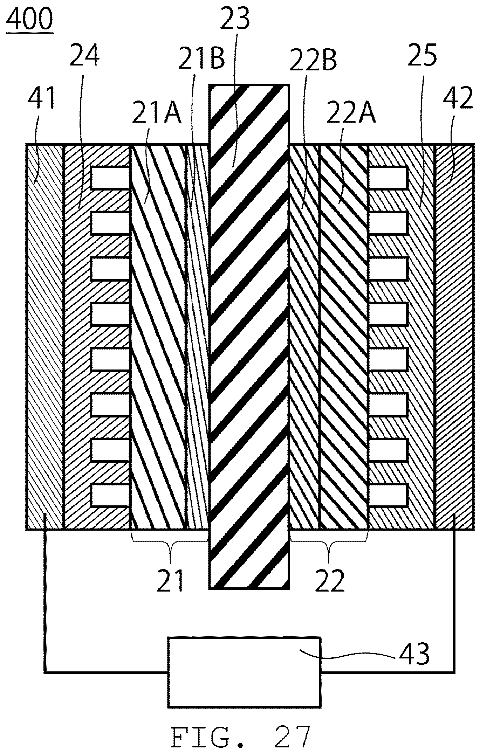

The fourth embodiment relates to an electrolytic apparatus and a fuel cell. An electrochemical cell 200 or a stack 300 using the electrochemical cell 200 is used for the electrolytic apparatus and the fuel cell. FIG. 27 shows a schematic diagram of the device 400 of the fourth embodiment. The device 400 includes an electrochemical cell 200. The device 400 illustrates a part of the actual device configuration. When CO₂ is electrolyzed in the electrochemical cell 200, the CO₂ electrolyzed in the electrochemical cell 200 may be CO₂ gas recovered from combustion gas etc. by using an amine solution or the like.

The apparatus 400 (401) has an electrochemical cell 200, an anode current collector 41, a cathode current collector 42 and a power supply or load 43.

The anode current collector 41 is provided on the first separator 24 of the electrochemical cell 200. The first separator 24 is electrically connected to the anode current collector 41.

The cathode current collector 42 is provided on the second separator 25 of the electrochemical cell 200. The second separator 25 is electrically connected to the cathode current collector 42.

It is preferable that separators 100-107 of the first embodiment are used for the first separator 24 or/and the second separator 25. One of the first separator 24 and the second separator 25 may be a separator without the narrowing part J and the expansion part K.

An anode current collector 41 and a cathode current collector 42 are connected to a power supply or load 43.

When the device 500 (501) is an electrolytic apparatus, a power supply 43 is connected between the anode current collector 41 and the cathode current collector 42.

When the device 500 (501) is a fuel cell, a load 43 is connected between the anode current collector 41 and the cathode current collector 42. The load 43 may be a power converter, a storage battery, or the like.

Hereinafter, although the present invention will be described in more detail based on examples, the present invention is not limited to these examples.

### (Example 1)

An electrochemical cell corresponding to FIG. 25 was fabricated using the separator 100 of FIG. 1 for the first separator 24 and the second separator 25.

### (Example 2)

An electrochemical cell corresponding to FIG. 25 was fabricated using the separator 100 of FIG. 1 for the first separator 24.

### (Example 3)

An electrochemical cell corresponding to FIG. 25 was fabricated using the separator 100 of FIG. 9 for the first separator 24 and the second separator 25.

### (Example 4)

An electrochemical cell corresponding to FIG. 25 was fabricated using the separator 100 of FIG. 14 for the first separator 24 and the second separator 25.

### (Example 5)

An electrochemical cell corresponding to FIG. 25 was fabricated using the separator 100 of FIG. 18 for the first separator 24 and the second separator 25.

### (Example 6)

An electrochemical cell corresponding to FIG. 25 was fabricated using the separator 100 of FIG. 21 for the first separator 24 and the second separator 25.

### (Example 7)

An electrochemical cell corresponding to FIG. 25 was fabricated using the separator 100 of FIG. 22 for the first separator 24 and the second separator 25.

### (Comparative Example 1)

An electrochemical cell corresponding to FIG. 25 was fabricated using a separator without the narrowing part J of FIG. 1 for the first separator 24 and the second separator 25.

Electrolysis operation for generating CO by electrolyzing CO₂ under the same conditions was performed using the electrochemical cells of Examples 1 to 7 and the electrochemical cell of Comparative Example 1. In all of Examples 1 to 7, gas accumulation in the separator was less likely than in Comparative Example 1, and the increase in cell voltage could be reduced even during long-term operation.

Fuel cell operation using methanol as a fuel under the same conditions was performed using the electrochemical cells of Examples 1 to 7 and the electrochemical cell of Comparative Example 1. In all of Examples 1 to 7, gas accumulation in the separator was less likely than in Comparative Example 1, and the decrease in cell voltage could be reduced even during long-term operation.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A separator (100) comprising:
a flow channel (10) comprising a first flow-channel wall (1A), a second flow-channel wall (1B), and a first flow-channel groove (2A) provided between the first flow-channel wall (1A) and the second flow-channel wall (1B), wherein
a first narrowing part (J1) and/or a first expansion part (K1) are provided in the first flow-channel groove (2A),
the first narrowing part (J1) narrows a part of the latter half of the first flow-channel groove (2A), and
the first expansion part (K1) expands a part of the latter half of the first flow-channel groove (2A).

2. The separator (100) according to claim 1, wherein
the flow channel (10) has a serpentine flow channel shape.

3. The separator (100) according to claim 1 or 2, wherein
the cross-sectional area where the first flow-channel groove (2A) is opened in the part where the first narrowing part (J1) is provided is 20% or more and 75% or less of the average cross-sectional area of the first flow-channel groove (2A), and
the cross-sectional area where the first flow-channel groove (2A) is opened in the part where the first expansion part (K1) is provided is 125% or more and 165% or less of the average cross-sectional area of the first flow-channel groove (2A).

4. The separator (100) according to any one of claims 1 to 3, wherein
the first expansion part (K1) does not penetrate through the first flow-channel wall (1A), and
the first expansion part (K1) does not penetrate through the second flow-channel wall (1B).

5. The separator (100) according to claim 2, wherein
the first narrowing part (J1) and the first expansion part (K1) are provided at a turn-around area in the latter half of the flow channel.

6. The separator (100) according to claim 2 or 5, wherein
the length of the first narrowing part (J1) is 1% or more and 100% or less of the length of the turn-around area of the flow channel (10), and
the length of the first expansion part (K1) is 1% or more and 100% or less of the length of the turn-around area of the flow channel (10).

7. The separator (100) according to any one of claims 1 to 6, wherein
the length of the first narrowing part (J1) is 0.1 times or more and 3 times or less the width of the first flow-channel groove (2A), and
the length of the first expansion part (K1) is 0.1 times or more and 3 times or less the width of the first flow-channel groove (2A).

8. The separator (100) according to any one of claims 1 to 7, wherein
a first blocking wall (F1) is provided in the first flow-channel groove (2A), and
the first blocking wall (F1) closes the first flow-channel groove (2A).

9. The separator according to any one of claims 1 to 8, wherein
the first narrowing part (J1) and/or the first expansion part (K1) are provided at the turn-around area which is closest to the side where fluid is discharged.

10. The separator (100) according to any one of claims 1 to 9, wherein
the flow channel (10) further comprises a third flow-channel wall (1C) and a second flow-channel groove (2B) provided between the third flow-channel wall (1C) and the second flow-channel wall (1B), and
the first flow-channel groove (2A) and the second flow-channel groove (2B) are connected by a first connecting passage.

11. The separator (100) according to any one of claims 1 to 10, wherein
the flow channel (10) further comprises a third flow-channel wall (1C) and a second flow-channel groove (2B) provided between the second flow-channel wall (1B) and the third flow-channel wall (1C),
the flow channel (10) connects a first location (P1) side and a second location (P2) side;
the former half of the first flow-channel groove (2A) and the former half of the second flow-channel groove (2B) are located at the first location (P1) side,
the latter half of the first flow-channel groove (2A) and the latter half of the second flow-channel groove (2B) are located at the second location (P2) side, and
the first flow-channel groove (2A) and the second flow-channel groove (2B) are parallel.

12. The separator (100) according to claim 11, wherein
a second narrowing part (J2) and/or a second expansion part (K2) are provided in the second flow-channel groove (2B),
the second narrowing part (J2) narrows a part of the latter half of the second flow-channel groove (2B), and
the second expansion part (K2) expands a part of the latter half of the second flow-channel groove (2B).

13. The separator (100) according to any one of claims 1 to 12, wherein
the flow channel further comprises a third flow-channel wall (1C) and a second flow-channel groove (2B) provided between the second flow-channel wall (1B) and the third flow-channel wall (1C),
the flow channel connects a first location (P1) side and a second location (P2) side;
the former half of the first flow-channel groove (2A) and the latter half of the second flow-channel groove (2B) are located at the first location (P1) side,
the latter half of the first flow-channel groove (2A) and the former half of the second flow-channel groove (2B) are located at the second location (P2) side,

14. The separator (100) according to claim 13, wherein
a second narrowing part (J2) and/or a second expansion part (K2) are provided in the second flow-channel groove (2B),
the second narrowing part (J2) narrows a part of the latter half of the second flow-channel groove (2B), and
the second expansion part (K2) expands a part of the latter half of the second flow-channel groove (2B).

15. An apparatus (500) comprising an electrochemical cell (300) which comprises a first electrode (21) including a support (21A), a second electrode (22) including a support (22A), a diaphragm (23) between the first electrode (21) and the second electrode (22), a first separator (24) connected to the first electrode (21), and a second separator (25) connected to the second electrode (22), wherein
the first separator (24) and/or the second separator (25) is the separator (100) according to any one of claims 1 to 14, and
the apparatus (500) is an electrolyzing apparatus or a fuel cell.
